# EUROPÄISCHE PATENTSCHRIFT

(11) **EP 2 428 382 B1**
(45) Veröffentlichungstag und Bekanntmachung des Hinweises auf die Patenterteilung: **28.02.2018**
(21) Anmeldenummer: 11179729.6
(22) Anmeldetag: 01.09.2011
(51) Int. Cl.: B60K 15/10, B62D 25/08, B60K 15/067, B60K 1/04, B60K 15/063, B60K 15/03, B62D 25/20, B60K 15/07

(54) **Hinterbau eines Kraftfahrzeugs**
Body rear end of a motor vehicle
Structure arrière d'un véhicule automobile

(30) Priorität: 13.09.2010 DE 102010040668
(43) Veröffentlichungstag der Anmeldung: 14.03.2012
(73) Patentinhaber: Bayerische Motoren Werke Aktiengesellschaft, 80809 München (DE)
(72) Erfinder: Schümchen, Detlef, 86559 Adelzhausen (DE)

(56) Entgegenhaltungen:
- EP-A1- 1 897 739
- EP-A2- 1 612 127
- DE-A1-102005 016 492
- DE-A1-102007 017 423
- DE-A1-102007 047 037
- US-A1- 2006 289 224

## Beschreibung

Die Erfindung betrifft einen Hinterbau eines Kraftfahrzeugs, mit den im Oberbegriff des Patentanspruches 1 angegebenen Merkmalen.

Ein derartiger Hinterbau eines Kraftfahrzeugs weist in der DE 10 2004 003 713 A1 eine Vorrichtung zum Speichern von Flüssigkeiten oder Gasen auf. Hierzu wird in einen Karosseriehohlraum ein Speichermittel eingebracht, das dann in einem Träger über der Hinterachse angeordnet ist. Das Speichermittel ist ein auf den innenraum des Trägers angepasster formbeständiger Flüssigkeitsbehälter, der bei der Montage waagerecht durch eine Montageöffnung in einen Innenraum des Trägers geschoben und an dem Träger befestigt wird. Die Montageöffnung wird dann über ein separates Verschlussblech geschlossen, das an dem Träger zu befestigen ist. Die Form des Trägers und insbesondere seine Innenwände schränken die Form des Flüssigkeitsbehälters erheblich ein. Es ist nicht vorgesehen und dürfte auch nicht ohne weiteres möglich sein, in den Innenraum des Trägers ein anderes Bauteil bzw. Speichermittel einzubringen und zu befestigen.

Die DE 10 2007 047 037 A1 sieht hinter der Hinterachse einen Freiraum bzw. Aufnahmeraum vor, in dem verschiedene Bauteile, beispielsweise ein Energiespeicher, ein Behälter für eine hintere, zusammen gefaltete Sitzreihe, ein Anbauteil mit einer Reserveradmulde, Anbauteile für Hybridkonzepte, ein Kraftstoffbehälter oder ein Behälter für ein Kraftstoffadditiv angeordnet werden kann. Nachdem der Freiraum bzw. Aufnahmeraum hinter der Hinterachse vorgesehen ist, kann dieser nur ein verhältnismäßig geringes Volumen aufweisen, in dem beispielsweise nur ein Kraftstofftank mit geringem Tankvolumen oder ein Energiespeicher mit nur geringer Energie angeordnet werden kann. Bei einem unfallbedingten Heckaufprall kann der betreffende Energiespeicher beschädigt werden, wodurch eine Weiterfahrt verhindert sein dürfte.
Der Erfindung liegt die Aufgabe zu Grunde, einen Hinterbau eines Kraftfahrzeugs mit den Merkmalen im Oberbegriff des Patentanspruches 1 anzugeben, der ohne wesentliche Karosserieänderungen eine Realisierung von mehreren Kraftfahrzeugen mit gleichen oder zumindest teilweise unterschiedlichen Antriebskonzepten ermöglicht, die jeweils mit einer Tank- oder Energiefüllung eine vorgegebene, beispielsweise gegenüber Kraftfahrzeugen mit einem Verbrennungsmotor vergleichbare Fahrstrecke fahren können.
Diese Aufgabe ist durch die Merkmale im Patentanspruch 1 gelöst. Vorteilhafte Ausgestaltungen der Erfindung sind den Unteransprüchen entnehmbar.
Der erfindungsgemäße Hinterbau eines Kraftfahrzeugs weist in der Karosserie des Kraftfahrzeugs über der Hinterachse einen Hohlraum auf, der durch eine vertikale Durchgangsöffnung gebildet ist, die vorne und hinten jeweils von einem Querträger und seitlich jeweils von einem Längsträger der Karosserie begrenzt ist. Die Längs- und Querträger bilden einen über den Umfang der Durchgangsöffnung geschlossenen Rahmen. Die Durchgangsöffnung ist von einem separaten, mit den Längs- und Querträgern fest oder lösbar verbundenen Behälter flüssigkeitsdicht verschlossen. Auf diese Weise bilden die Längs- und Querträger einen sehr stabilen Rahmen, der die Durchgangsöffnung umgibt, in der beispielsweise empfindliche Bauteile wie ein Kraftstofftank und/oder wenigstens ein Hochvoltspeicher und/oder ein Behälter für ein kathalytisches Reduktionsmittel zur Behandlung und Verbesserung der Abgase des Fahrzeugmotors und/oder ein Behälter für ein flüssiges Gas besonders geschützt untergebracht sind. Der Raum über der Hinterachse wird bisher bei Kraftfahrzeugen nicht oder nur in geringem Umfang genutzt. Mit dem erfindungsgemäßen Hinterbau können Kraftfahrzeuge mit üblichen oder neuen Antriebskonzepten auf der Basis einer einzigen Rohkarosserie realisiert werden, wobei lediglich in die Durchgangsöffnung ein entsprechender Behälter einzusetzen ist, der dann die Durchgangsöffnung wasserdicht verschließt. Ebenso kann die Durchgangsöffnung von einem Blechteil verschlossen sein, beispielsweise wenn ein Kraftstofftank und/oder wenigstens ein Hochvoltspeicher und/oder ein Behälter für ein kathalytisches Reduktionsmittel zur Behandlung und Verbesserung der Abgase des Fahrzeugmotors und/oder ein Behälter für ein flüssiges Gas in wenigstens einem vorderen und/oder hinteren Freiraum entsprechend vor bzw. hinter dem Rahmen angeordnet ist bzw. sind. Erfindungsgemäß ist weiter vorgesehen, dass vor dem Rahmen ein vorderer Freiraum oder Aufnahmeraum und/oder hinter dem Rahmen ein hinterer Freiraum oder Aufnahmeraum gebildet ist bzw. sind. In diesem Fall können an verschiedenen, weitgehend geschützten Stellen beispielsweise Behälter für Kraftstoffe oder Energiespeicher angeordnet werden, die eine entsprechend hohe Fahrstrecke beispielsweise einerseits mit einem Verbrennungsmotor und andererseits mit einem Elektromotor ermöglichen. Sind die Behälter für Kraftstoffe und/oder Energiespeicher an verschiedenen Stellen am Kraftfahrzeug beispielsweise hinter dem Rahmen und vor und/oder in der Durchgangsöffnung des Rahmens verteilt angeordnet, kann der hinter dem Rahmen befindliche Behälter für einen Kraftstoff bzw. ein hinter dem Rahmen angeordneter Energiespeicher entsprechend geringer dimensioniert sein. Dieser Behälter bzw. Energiespeicher kann sich dann beispielsweise nur in einem geringen Umfang nach hinten erstrecken, wodurch die Gefahr einer Beschädigung beispielsweise bei einem unfallbedingten Heckaufprall entsprechend vermindert ist. Ebenso können in diesem Fall dahinter weitere Bauteile, beispielsweise ein Nachschalldämpfer beispielsweise mit seiner Längserstreckung in Fahrzeugquerrichtung angeordnet sein.
Sechs Ausführungsbeispiele der Erfindung werden anhand einer Zeichnung näher erläutert. Es zeigen
- Fig.: 1 ein erstes Ausführungsbeispiel, nicht Teil der vorliegenden Ereindung, in einer vereinfachten Draufsicht auf den Hinterbau eines Kraftfahrzeugs, mit einem Kraftstofftank in einem vorderen Freiraum bzw. Aufnahmeraum vor der über der Hinterachse gebildeten Durchgangsöffnung, die wie ein hinterer Freiraum bzw. Aufnahmeraum von einem zugeordneten Blechteil wasserdicht verschlossen ist,
- Fig. 2: ein zweites Ausführungsbeispiel in einer Fig. 1 entsprechenden Ansicht, bei dem die Durchgangsöffnung über der Hinterachse von einem Kraftstofftank wasserdicht verschlossen ist,
- Fig. 3: ein drittes Ausführungsbeispiel in einer Fig. 2 entsprechenden Ansicht, bei dem vor der Durchgangsöffnung über der Hinterachse zwei Hochvoltspeicher mit einem seitlichen Abstand nebeneinander angeordnet sind,
- Fig. 4: ein viertes Ausführungsbeispiel in einer Fig. 1 oder Fig. 2 entsprechenden Ansicht, mit einem wasserdicht in die Durchgangsöffnung über der Hinterachse eingebrachten Behälter für ein kathalytisches Reduktionsmittel zur Behandlung und Verbesserung der Abgase des Fahrzeugmotors,
- Fig. 5: ein fünftes Ausführungsbeispiel in einer Fig. 3 entsprechenden Ansicht, bei dem vor der Durchgangsöffnung über der Hinterachse mit einem seitlichen Abstand nebeneinander ein Kraftstofftank und ein Hochvoltspeicher angeordnet sind,
- Fig. 6: ein sechstes Ausführungsbeispiel in einer Fig. 5 entsprechenden Ansicht, mit zwei vor der Durchgangsöffnung über der Hinterachse mit einem seitlichen Abstand nebeneinander angeordneten Behältern und einem Behälter hinter der Durchgangsöffnung, wobei die Behälter ein gleiches oder teilweise gleiches oder unterschiedliches komprimiertes gasförmiges oder flüssiges Gas enthalten,
- Fig. 7: eine perspektivische vereinfachte Ansicht auf einen beispielsweise gemäß den Figuren 2, 3, 5 und 6 in der Durchgangsöffnung angeordneten Kraftstofftank und
- Fig. 8: einen vereinfachten vertikalen Schnitt durch den in Fig. 7 dargestellten Kraftstofftank, der von einem Gepäckraumboden überdeckt ist.

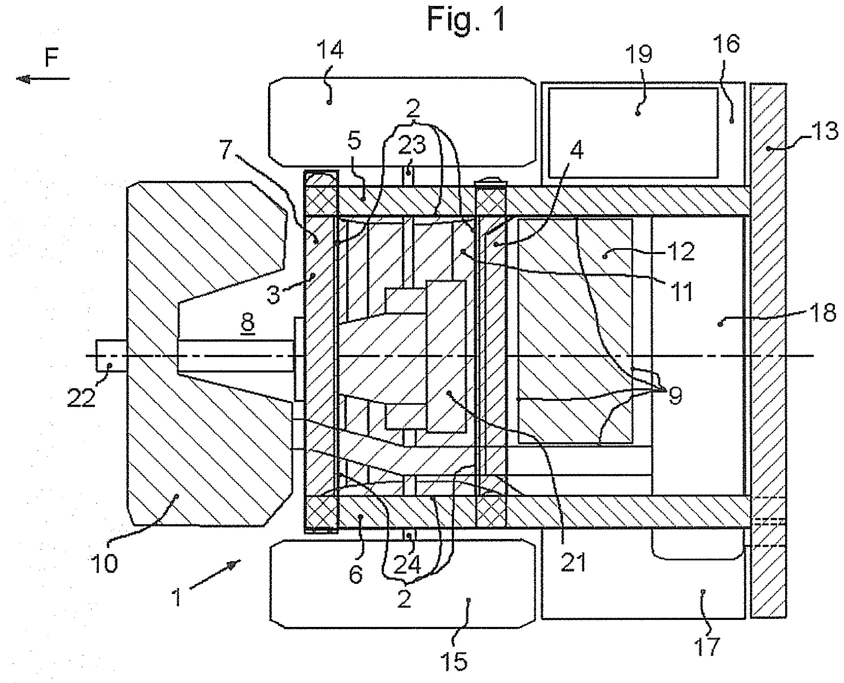

In Figur 1 ist gemäß einem ersten Ausführungsbeispiel, nicht Teil der vorliegenden Erfindung, ein Hinterbau eines Kraftfahrzeugs vereinfacht dargestellt, der über der Hinterachse 1 einen Hohlraum in der Karosserie des Kraftfahrzeugs aufweist, der eine vertikale Durchgangsöffnung 2 bildet. Die Durchgangsöffnung 2 ist vorne und hinten jeweils von einem Querträger 3, 4 und seitlich jeweils von einem Längsträger 5, 6 der Karosserie begrenzt, die einen über den Umfang der Durchgangsöffnung 2 geschlossenen Rahmen 7 bilden.

Die normale Fahrtrichtung des Kraftfahrzeugs ist mit einem Pfeil F angegeben.

Der Rahmen 7 ist im Wesentlichen in Fahrzeugquerrichtung zwischen den hinteren Rädern 14, 15 angeordnet und weist zu diesen jeweils einen seitlichen Abstand auf. Vor dem Rahmen 7 ist ein vorderer Freiraum oder Aufnahmeraum 8 vorgesehen. Hinter dem Rahmen 7 ist ein hinterer Freiraum oder Aufnahmeraum 9 gebildet.

Bei dem ersten Ausführungsbeispiel sind in dem vorderen Freiraum bzw. Aufnahmeraum 8 ein Kraftstofftank 10 beispielsweise für Benzin oder Diesel oder Methanol oder Ethanol sowie nicht dargestellte Teile wie eine Pumpe angeordnet, die Bestandteile einer Transporteinrichtung sind, die im Fahrbetrieb einen Transport des Kraftstoffes zu einem nicht dargestellten Verbrennungsmotor bewirkt.

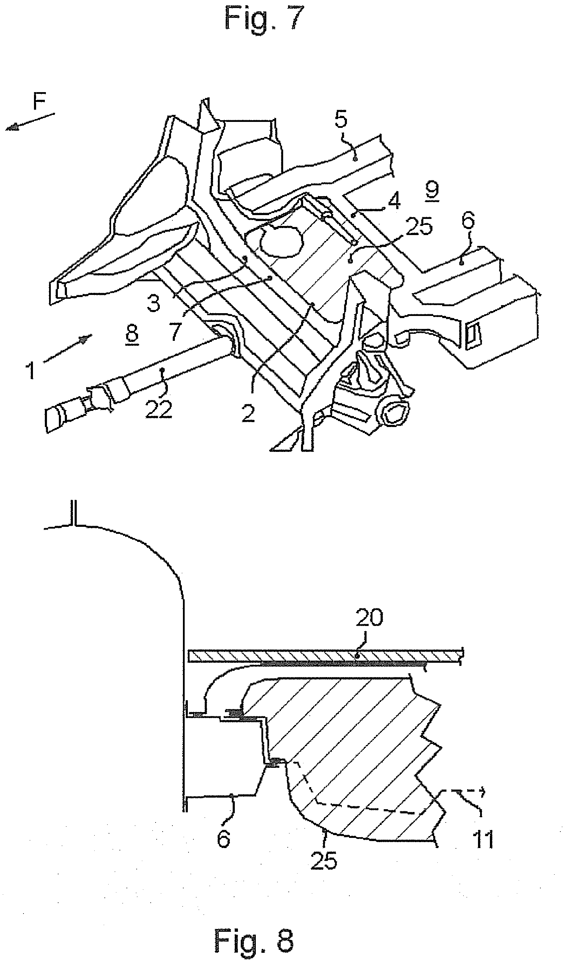

Die Durchgangsöffnung 2 und der hinter der Durchgangsöffnung 2 befindliche Freiraum bzw. Aufnahmeraum 9 sind bei dem ersten Ausführungsbeispiel jeweils von einem durch eine Schraffur in Fig. 1 markierten Blechteil 11 bzw. 12 zumindest in vertikaler Richtung flüssigkeitsdicht verschlossen. Das die Durchgangsöffnung 2 verschließende Blechteil 11 ist in Fig. 8 durch eine unterbrochene Linie angedeutet, wobei bei Verwendung des Blechteiles 11 der in Fig. 8 nach rechts oben schraffiert dargestellte Flüssigkeitstank in der Durchgangsöffnung 2 nicht angeordnet ist.

Die Blechteile 11,12 sind jeweils bis zum Anliegen an Anschlagflächen an den Längsträgern 5, 6 und/oder Querträgern 3, 4 zumindest bereichsweise von oben oder von unten in die zugeordnete Durchgangsöffnung 2 und in den zugeordneten hinteren Freiraum bzw. Aufnahmeraum 9 eingebracht und beispielsweise mit den Längsträgern 5, 6 und/oder Querträgern 3, 4 und/oder eventuell mit anderen Teilen der Karosserie verklebt oder auf andere Weise verbunden.

Die mit einem seitlichen Abstand voneinander im Wesentlichen in Fahrzeuglängsrichtung angeordneten Längsträger 5, 6 erstrecken sich nach hinten bis über jeweils den seitlichen hinteren Endbereich des hinteren Freiraumes bzw. Aufnahmeraumes 9 hinaus nach hinten zu einem Karosseriequerträger 13, der sich im Wesentlichen über die Breite des Kraftfahrzeugs in Fahrzeugquerrichtung erstreckt.

In Fig. 1 ist nicht erkennbar, dass bei dem Ausführungsbeispiel der vordere und hintere Freiraum bzw. Aufnahmeraum 8 bzw. 9 unten, vorne und hinten sowie jeweils seitlich von Wänden wasserdicht begrenzt ist.

Die Längsträger 5, 6 erstrecken sich in einer Draufsicht jeweils seitlich zwischen einem seitlich äußeren Randbereich des hinteren Freiraumes bzw. Aufnahmeraumes 9 und einem seitlich inneren Randbereich eines seitlich äußeren Aufnahmefaches 16 bzw. 17. Das jeweils seitlich äußere Aufnahmefach 16 bzw. 17 erstreckt sich in Fahrzeuglängsrichtung nach hinten etwa von einem Seitenbereich des hinteren Freiraumes bzw. Aufnahmeraumes 9 bis über den hinteren Randbereich des hinteren Freiraumes bzw. Aufnahmeraumes 9 hinaus nach hinten und endet beispielsweise vor dem Karosseriequerträger 13. Der Boden des betreffenden Aufnahmefaches 16 bzw. 17 ist beispielsweise mit einem vertikalen Abstand unter dem seitlich benachbarten Längsträger 5 bzw. 6 angeordnet.

Bei dem Ausführungsbeispiel ist hinter dem hinteren Freiraum bzw. Aufnahmeraum 9 ein Nachschalldämpfer 18 einer Auspuffanlage des Kraftfahrzeugs beispielsweise mit seiner Längserstreckung in Fahrzeugquerrichtung angeordnet. In dem seitlich äußeren Aufnahmefach 16 ist eine Batterie 19 angeordnet.

Die Längsträger 5, 6 sind hinter dem hinteren Freiraum bzw. Aufnahmeraum 9 und hinter den seitlich äußeren Aufnahmefächern 16, 17 sowie hinter dem Nachschalldämpfer 18 über den Karosseriequerträger 13 verbunden.

Bei dem Ausführungsbeispiel befindet sich der vordere Freiraum bzw. Aufnahmeraum 8 etwa unter den Rücksitzen im Fahrgastraum des Kraftfahrzeugs, der mit seinem nicht dargestellten Bodenblech den Kraftstofftank 10 überdeckt. Die Durchgangsöffnung 2 und der hintere Freiraum bzw. Aufnahmeraum 9 sind von einem in Fig. 8 erkennbaren ein- oder mehrteiligen Gepäckraumboden 20 überdeckt, der lösbar oder verstellbar angeordnet ist oder eine Öffnung aufweist, die von einem lösbaren oder verstellbaren Bodenteil verschließbar ist und einen Zugang zu der Durchgangsöffnung 2 und/oder zu dem hinteren Freiraum bzw. Aufnahmeraum 9 von oben ermöglicht.

Unter der Durchgangsöffnung 2 befindet sich ein Hinterachsgetriebe 21, in das eine von einem vorderen Verbrennungsmotor angetriebene Kardanwelle 22 mündet, die ihr Drehmoment von dem Hinterachsgetriebe eventuell über- oder untersetzt an zwei jeweils seitlich von dem Hinterachsgetriebe 21 abführende Antriebswellen 23, 24 abgibt, die jeweils mit einem zugeordneten hinteren Rad 14 bzw. 15 drehfest gelenkig verbunden sind.

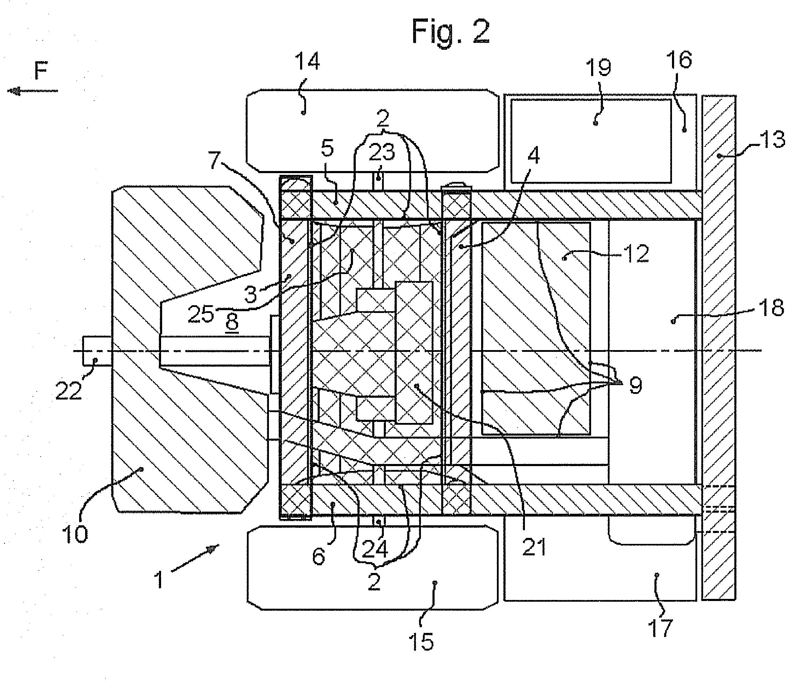

Ein zweites, in Fig. 2 dargestelltes Ausführungsbeispiel weist mit dem ersten Ausführungsbeispiel gleiche oder vergleichbare Bauteile auf, die zur Vermeidung einer wiederholten Beschreibung mit einer gleichen Bezugszahl versehen sind.

Bei dem zweiten Ausführungsbeispiel ist das bei dem ersten Ausführungsbeispiel vorgesehene Blechteil 11, das in Fig. 8 mit einer unterbrochenen Linie vereinfacht dargestellt ist, nicht verwendet.

Stattdessen ist bei dem zweiten Ausführungsbeispiel in der von dem Rahmen 7 umschlossenen Durchgangsöffnung 2 ein in Fig. 2 durch eine Kreuzschraffur markierter Kraftstofftank 25 beispielsweise für Benzin oder Diesel oder Methanol oder Ethanol sowie nicht dargestellte Teile wie eine Pumpe angeordnet, die Bestandteile einer Transporteinrichtung sind, die im Fahrbetrieb einen Transport des Kraftstoffes zu einem nicht dargestellten Verbrennungsmotor bewirkt. Die Durchgangsöffnung 2 ist von dem in den Figuren 2 und 8 erkennbaren Kraftstofftank 25 zumindest in vertikaler Richtung wasserdicht verschlossen, der zumindest bereichsweise bis zum Anliegen an Anschlagflächen an den Längsträgern 5, 6 und/oder Querträgern 3, 4 von oben in die Durchgangsöffnung 2 eingebracht und beispielsweise an den Längsträgern 5, 6 und/oder Querträgern 3, 4 beispielsweise durch Kleben befestigt ist. An Stelle des Kraftstofftanks 25 könnte auch beispielsweise wenigstens ein Hochvoltspeicher und/oder ein Behälter für ein kathalytisches Reduktionsmittel zur Behandlung und Verbesserung der Abgase des Fahrzeugmotors und/oder ein Behälter für ein flüssiges Gas und/oder ein Reformer, der für die Umwandlung von Benzin in Wasserstoff benötigt wird, verwendet sein, der dann die Durchgangsöffnung 2 allein oder zusammen mit weiteren Bauteilen vorzugsweise als Baueinheit wasserdicht verschließt.

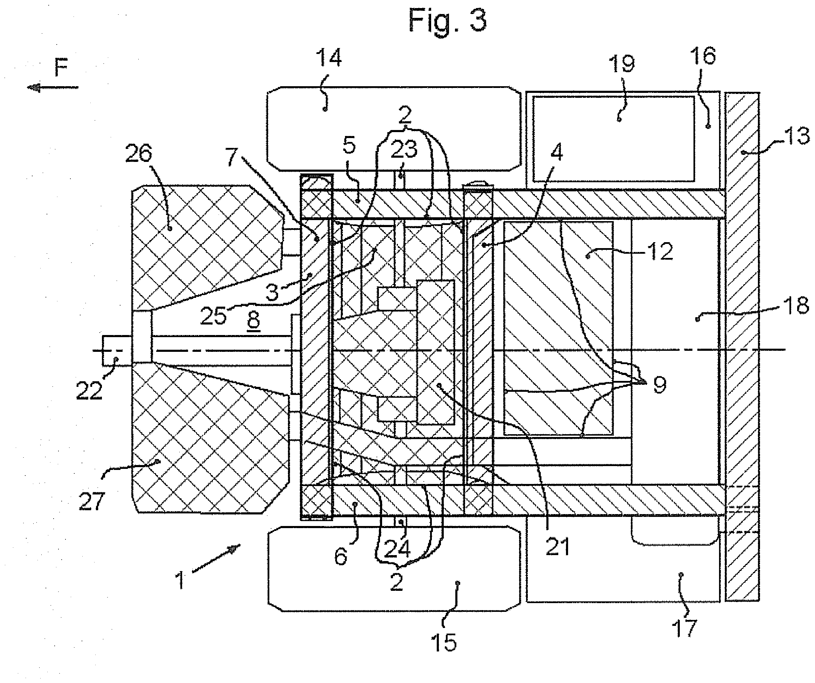

Das in Fig. 3 dargestellte dritte Ausführungsbeispiel weist mit dem ersten Ausführungsbeispiel und mit dem zweiten Ausführungsbeispiel gleiche oder vergleichbare Bauteile auf, die zur Vermeidung einer wiederholten Beschreibung mit einer gleichen Bezugszahl versehen sind.

Bei dem dritten Ausführungsbeispiel gemäß Fig. 3 sind in dem vorderen Freiraum bzw. Aufnahmeraum 8 an Stelle des bei dem ersten und zweiten Ausführungsbeispiel vorgesehenen Kraftstofftanks 10 zwei Hochvoltspeicher 26, 27 seitlich mit einem Abstand nebeneinander angeordnet, die mit einem Elektromotor oder zusätzlichen Elektromotor verbunden oder zu verbinden sind. Die Hachvoltspeicher 26, 27 können auch untereinander verbunden sein. Jeder Hochvoltspeicher 26 bzw. 27 kann mehrere Hochvoltspeicher-Pakete aufweisen, die untereinander insgesamt oder teilweise in Serie oder Reihe angeordnet sein oder so verbunden werden können. Ist kein Verbrennungsmotor vorgesehen, so entfällt der in der Fig. 3 dargestellte Nachschalldämpfer 18, der für den Fall vorgesehen ist, dass zusätzlich zu einem Elektromotor ein Verbrennungsmotor vorgesehen ist.

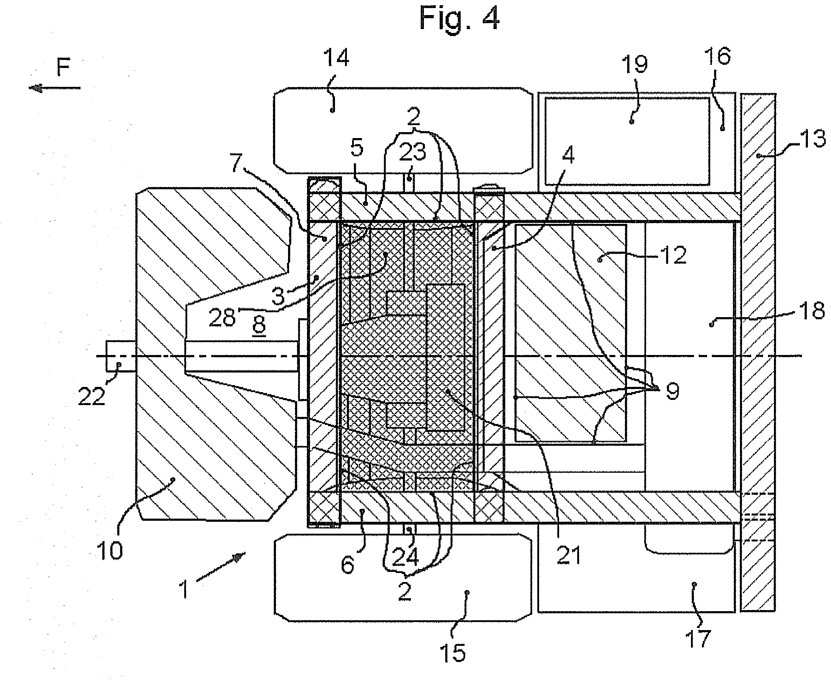

Ein viertes Ausführungsbeispiel ist in Fig. 4 vereinfacht abgebildet, das mit dem ersten Ausführungsbeispiel gleiche oder vergleichbare Bauteile aufweist, die zur Vermeidung einer wiederholten Beschreibung mit einer gleichen Bezugszahl versehen sind.

Bei dem vierten Ausführungsbeispiel ist das bei dem ersten Ausführungsbeispiel vorgesehene Blechteil 11, das in Fig. 8 mit einer unterbrochenen Linie vereinfacht dargestellt ist, nicht verwendet.

Bei dem vierten, Fig. 4 entsprechenden Ausführungsbeispiel ist in der von dem Rahmen 7 umschlossenen Durchgangsöffnung 2 ein in Fig. 4 durch eine enge Kreuzschraffur markierter Behälter 28 für ein kathalytisches Reduktionsmittel, beispielsweise Harnstoff, angeordnet. Das Reduktionsmittel ist zur Behandlung und Verbesserung der Abgase des Fahrzeug-Verbrennungsmotors verwendet und wird hierzu beispielsweise in den Verbrennungsraum des Verbrennungsmotors eingespritzt. Der Behälter 28 verschließt die Durchgangsöffnung 2 zumindest in vertikaler Richtung wasserdicht.

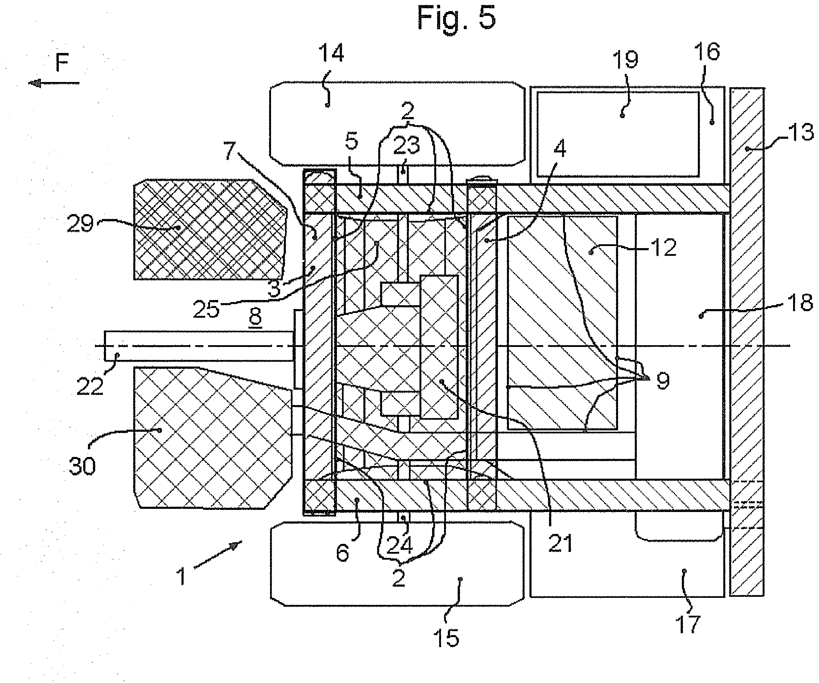

In Fig. 5 ist ein fünftes Ausführungsbeispiel vereinfacht dargestellt, das insbesondere mit dem zweiten und dritten Ausführungsbeispiel gleiche bzw. vergleichbare Bauteile aufweist. Diese sind zur Vermeidung einer wiederholten Beschreibung mit einer gleichen Bezugszahl versehen.

Das fünfte Ausführungsbeispiel sieht vor, dass in dem vorderen Freiraum bzw. Aufnahmeraum 8 auf einer Seite ein Kraftstofftank 29 beispielsweise für Benzin oder Diesel oder Methanol oder Ethanol sowie nicht dargestellte Teile wie eine Pumpe angeordnet sind, die Bestandteile einer Transporteinrichtung sind, die im Fahrbetrieb einen Transport des Kraftstoffes zu einem nicht dargestellten Verbrennungsmotor bewirkt. Außerdem sind bei dem fünften Ausführungsbeispiel in dem vorderen Freiraum bzw. Aufnahmeraum 8 auf der anderen Seite ein Hochvoltspeicher 30 angeordnet, der mit einem Elektromotor verbunden oder zu verbinden ist.

Bei einer alternativen Ausführung kann der Hochvoltspeicher auf einer Seite des Kraftfahrzeugs beispielsweise durch einen Kraftstofftank mit Zubehör oder einen Behälter für ein kathalytisches Reduktionsmittel, das zur Behandlung und Verbesserung der Abgase des Fahrzeug-Verbrennungsmotors verwendet ist, ersetzt sein, wenn kein Elektromotor verwendet ist.

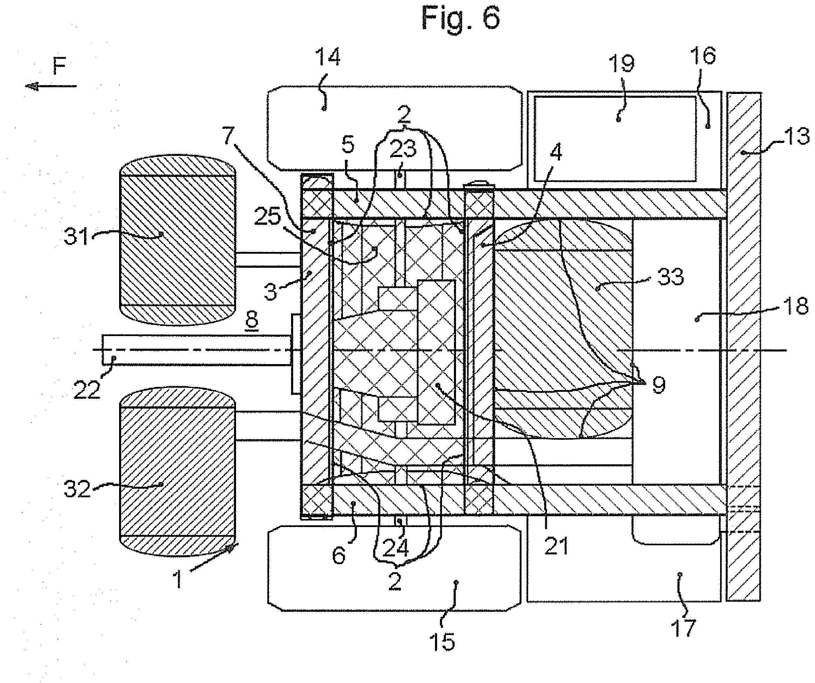

Ein sechstes, Fig. 6 entsprechendes Ausführungsbeispiel weist mit dem zweiten, dritten und fünften Ausführungsbeispiel gleiche bzw. vergleichbare Bauteile auf, die zur Vermeidung einer wiederholten Beschreibung mit einer gleichen Bezugszahl versehen sind.

Das sechste Ausführungsbeispiel gemäß Fig. 6 sieht vor, dass in dem vorderen Freiraum bzw. Aufnahmeraum 8 auf einer Seite ein Behälter 31 beispielsweise für ein gasförmiges oder flüssiges Gas oder Wasserstoff angeordnet ist. Auf der anderen Seite des vorderen Freiraumes bzw. Aufnahmeraumes 8 ist ein Behälter 32 beispielsweise für ein gasförmiges Gas oder flüssiges Gas oder Wasserstoff oder ein Reformer, der für die Umwandlung von Benzin in Wasserstoff benötigt wird, angeordnet. Außerdem ist bei diesem Ausführungsbeispiel in dem hinteren Freiraum bzw. Aufnahmeraum 9 ein Behälter 33 beispielsweise für ein gasförmiges oder flüssiges Gas oder Wasserstoff oder ein Reformer, der für die Umwandlung von Benzin in Wasserstoff benötigt wird, angeordnet. Die Behälter 31, 32, 33 sind mit wenigstens einem Antrieb, beispielsweise einem Verbrennungsmotor, bzw. bei Eignung mit einer Brennstoffzelle des Kraftfahrzeugs verbunden oder zu verbinden. Beispielsweise bei Gleichartigkeit können die Behälter 31, 32, 33 auch insgesamt oder teilweise untereinander verbunden oder zu verbinden sein.

Fig. 7 stellt eine perspektivische, vereinfachte Ansicht auf den in den Figuren 2, 3, 5 und 6 in der Durchgangsöffnung angeordneten Kraftstofftank 25 dar.

In Fig. 8 ist ein vereinfachter vertikaler Schnitt durch den Kraftstofftank in Fig. 7 vereinfacht dargestellt, der von einem Gepäckraumboden überdeckt ist.

Die Erfindung kann selbstverständlich von den sechs Ausführungsbeispielen abweichend ausgeführt werden. Die Längs- und Querträger, die vorne, hinten und seitlich die Durchgangsöffnung begrenzen, können insgesamt oder bereichsweise gerade und/oder gekrümmt verlaufen. Die Längs- und Querträger bilden einen ecksteifen Rahmen, der die Durchgangsöffnung sehr stabil umgibt, so dass ein in der Durchgangsöffnung untergebrachter Behälter oder Gegenstand, beispielsweise ein Reformer, der für die Umwandlung von Benzin in Wasserstoff benötigt wird, auch bei einem Unfall mit einem anderen Kraftfahrzeug geschützt ist. Bei Verwendung eines vorderen und/oder hinteren Freiraumes bzw. Aufnahmeraumes kann auch der betreffende Freiraum bzw. Aufnahmeraum von wenigstens einem weiteren Längs- und/oder Querträger begrenzt sein, wodurch ein entsprechender Schutz für wenigstens einen in dem betreffenden vorderen und/oder hinteren Freiraum bzw. Aufnahmeraum untergebrachten Behälter oder Gegenstand, beispielsweise einen Reformer, der für die Umwandlung von Benzin in Wasserstoff benötigt wird, gegeben ist. Bei Verwendung wenigstens eines Blechteiles oder Behälters kann das Blechteil bzw. der Behälter bzw. der Reformer von unten oder von oben in die betreffende Durchgangsöffnung bzw. in den vorderen oder hinteren Freiraum bzw. Aufnahmeraum beispielsweise bis zum Anliegen an Anschlagflächen an den Längsträgern und/oder Querträgern eingebracht und befestigt sein. Ein Blechteil oder Behälter kann auch lediglich die betreffende Durchgangsöffnung bzw. den vorderen oder hinteren Freiraum bzw. Aufnahmeraum von oben oder von unten überdecken und auf beliebige Weise beispielsweise durch Verkleben mit wenigstens einem Teil der Karosserie befestigt sein. Mit der Erfindung ist für einen Fahrzeughersteller, der unterschiedliche Fahrzeuge fertigt, ein variables Hinterbaukonzept möglich, bei dem mit nur einer Basis-Rohbaukarosserie unterschiedliche Fahrzeugvarianten möglich sind, die unterschiedliche Antriebs-Konzepte aufweisen können. Die unterschiedlichen, auf einer Rohbaukarosserie aufbauenden Fahrzeuge können beispielsweise einen Verbrennungsmotor und/oder einen Elektromotor und/oder wenigstens eine Brennstoffzelle aufweisen. Eine größte Variantenvielfalt wird erreicht, wenn vor dem die Durchgangsöffnung umgebenden Rahmen ein vorderer Freiraum oder Aufnahmeraum und/oder hinter dem Rahmen ein hinterer Freiraum oder Aufnahmeraum gebildet ist bzw. sind. In der Durchgangsöffnung oder gegebenenfalls in dem vorderen und/oder hinteren Freiraum bzw. Aufnahmeraum kann ein Kraftstofftank und/oder wenigstens ein Hochvoltspeicher und/oder ein Behälter für ein kathalytisches Reduktionsmittel zur Behandlung und Verbesserung der Abgase des Fahrzeugmotors und/oder ein Behälter für ein gasförmiges oder flüssiges Gas oder Wasserstoff oder ein Reformer, der für die Umwandlung von Benzin in Wasserstoff benötigt wird, angeordnet sein. Der bei dem gasförmigen oder flüssigen Gas enthaltene Wasserstoff ist separat genannt, der zur Energiegewinnung bzw. -freisetzung beispielsweise in einer Brennstoffzelle reagiert. In den Figuren sind übliche Bodenbleche an der Karosserie des Kraftfahrzeugs nicht dargestellt. Ist die Durchgangsöffnung oder der vordere oder hintere Freiraum bzw. Aufnahmeraum von einem zugeordneten Blechteil verschlossen, so kann dennoch in dem Aufnahmeraum oder vorderen oder hinteren Freiraum bzw. Aufnahmeraum wenigstens ein Gegenstand, beispielsweise eine Batterie, angeordnet sein. Das Gas kann beispielsweise komprimiertes Methanol oder Ethanol oder ein Propangas sein. Durch die vielfältigen Anordnungsmöglichkeiten wenigstens eines Kraftstofftanks und/oder Hochvoltspeichers und/oder Behälters für ein kathalytisches Reduktionsmittel zur Behandlung und Verbesserung der Abgase eines Fahrzeugmotors und/oder eines Behälters für ein gasförmiges oder flüssiges Gas oder Wasserstoff und/oder eines Reformers, der für die Umwandlung von Benzin in Wasserstoff benötigt wird, können mit im wesentlichen einer einzigen Rohkarosserie durch kleine Anpassungen verschiedene Kraftfahrzeuge mit sehr unterschiedlichen Antriebskonzepten realisiert werden, die in der Fahrleistung eine etwa gleiche Reichweite aufweisen können, die mit der eines Kraftfahrzeugs mit Benzin- oder Dieselmotor vergleichbar ist.

## Patentansprüche

1. Hinterbau eines Kraftfahrzeugs, mit einem Hohlraum, der über der Hinterachse in der Karosserie des Kraftfahrzeugs ausgebildet ist, **dadurch gekennzeichnet, dass** der Hohlraum durch eine vertikale Durchgangsöffnung (2) gebildet ist, die vorne und hinten jeweils von einem Querträger (3, 4) und seitlich jeweils von einem Längsträger (5, 6) der Karosserie begrenzt ist, die einen über den Umfang der Durchgangsöffnung (2) geschlossenen Rahmen (7) bilden, und die Durchgangsöffnung (2) von einem separaten, mit den Längs- und Querträgern (3, 4, 5, 6) fest oder lösbar verbundenen Behälter (25, 28) flüssigkeitsdicht verschlossen ist.

2. Hinterbau nach Anspruch 1, **dadurch gekennzeichnet, dass** der Behälter (25, 28) bis zum Anliegen an Anschlagflächen an den Längsträgern (5, 6) und/oder Querträgern (3, 4) zumindest bereichsweise von oben oder von unten in die Durchgangsöffnung (2) eingebracht und befestigt ist.

3. Hinterbau nach Anspruch 1 oder 2, **dadurch gekennzeichnet, dass** vor dem Rahmen (7) ein vorderer Freiraum oder Aufnahmeraum (8) und/oder hinter dem Rahmen (7) ein hinterer Freiraum oder Aufnahmeraum (9) gebildet ist bzw. sind.

4. Hinterbau nach einem der Ansprüche 1 bis 3, **dadurch gekennzeichnet, dass** in der Durchgangsöffnung (2) oder gegebenenfalls in dem vorderen (8) und/- oder hinteren Freiraum bzw. Aufnahmeraum (9) ein Kraftstofftank (10, 25, 29) und/oder wenigstens ein Hochvoltspeicher (26, 27, 30) und/oder ein Behälter (28) für ein kathalytisches Reduktionsmittel zur Behandlung und Verbesserung der Abgase des Fahrzeugmotors und/oder ein Behälter (31, 32, 33) für ein gasförmiges oder flüssiges Gas oder Wasserstoff oder ein Reformer, der für die Umwandlung von Benzin in Wasserstoff benötigt wird, angeordnet ist bzw. sind.

5. Hinterbau nach Anspruch 3 oder 4, **dadurch gekennzeichnet, dass** sich die Längsträger (5, 6) zumindest bis zu dem seitlichen hinteren Endbereich des hinteren Freiraumes bzw. Aufnahmeraumes (9) nach hinten erstrecken.

6. Hinterbau nach einem der Ansprüche 3 oder 5, **dadurch gekennzeichnet, dass** der vordere (8) und/oder hintere Freiraum bzw. Aufnahmeraum (9) unten, vorne und hinten sowie jeweils seitlich von Wänden wasserdicht begrenzt ist.

7. Hinterbau nach einem der Ansprüche 3 bis 6, **dadurch gekennzeichnet, dass** zumindest ein Längsträger (5, 6) in einer Draufsicht seitlich zwischen dem seitlich äußeren Randbereich des hinteren Freiraumes bzw. Aufnahmeraumes (9) und einem seitlich inneren Randbereich eines seitlich äußeren Aufnahmefaches (16, 17) angeordnet ist und zumindest bis über den hinteren Randbereich des seitlich äußeren Aufnahmefaches (16, 17) nach hinten verläuft, und sich das seitlich äußere Aufnahmefach (16, 17) in Fahrzeuglängsrichtung von einem Seitenbereich des hinteren Freiraumes bzw. Aufnahmeraumes (9) bis über den hinteren Randbereich des hinteren Freiraumes bzw. Aufnahmeraumes (9) hinaus nach hinten erstreckt, oder zusätzlich der Boden des Aufnahmefaches (16, 17) mit einem vertikalen Abstand über oder unter dem seitlich benachbarten Längsträger (5, 6) oder auf Höhe des benachbarten Längsträgers angeordnet ist.

8. Hinterbau nach einem der Ansprüche 3 bis 7, **dadurch gekennzeichnet, dass** hinter dem hinteren Freiraum bzw. Aufnahmeraum (9) ein Schalldämpfer (18) einer Auspuffanlage des Kraftfahrzeugs beispielsweise mit seiner Längserstreckung in Fahrzeugquerrichtung angeordnet ist und/oder gegebenenfalls in dem seitlich äußeren Aufnahmefach (16) eine Batterie (19) angeordnet ist.

9. Hinterbau nach einem der Ansprüche 3 bis 8, **dadurch gekennzeichnet, dass** die Längsträger (5, 6) hinter dem hinteren Freiraum bzw. Aufnahmeraum (9) oder gegebenenfalls hinter dem seitlich äußeren Aufnahmefach (16, 17) oder gegebenenfalls hinter dem Schalldämpfer (18) über einen Karosseriequerträger (13) verbunden sind.

10. Hinterbau nach einem der Ansprüche 3 bis 9, **dadurch gekennzeichnet, dass** jeweils in der Durchgangsöffnung (2) oder gegebenenfalls in dem vorderen (8) und/oder hinteren Freiraum bzw. Aufnahmeraum (9) auf einer Seite oder vorne bzw. hinten ein Kraftstofftank (29) oder wenigstens ein Hochvoltspeicher (26, 27, 30) oder ein Behälter für ein kathalytisches Reduktionsmittel zur Behandlung und Verbesserung der Abgase des Fahrzeugmotors oder ein Behälter (31, 32) für ein gasförmiges oder flüssiges Gas oder Wasserstoff oder ein Reformer, der für die Umwandlung von Benzin in Wasserstoff benötigt wird, angeordnet ist und auf der anderen Seite ein Kraftstofftank oder wenigstens ein Hochvoltspeicher (26, 27, 30) oder ein Behälter für ein kathalytisches Reduktionsmittel zur Behandlung und Verbesserung der Abgase des Fahrzeugmotors oder ein Behälter (31, 32) für ein gasförmiges oder flüssiges Gas oder Wasserstoff oder ein Reformer, der für die Umwandlung von Benzin in Wasserstoff benötigt wird, angeordnet ist, die mit wenigstens einem Antrieb bzw. bei Eignung mit einer Brennstoffzelle des Kraftfahrzeugs oder beispielsweise bei Gleichartigkeit untereinander verbunden oder verbindbar sind.

11. Hinterbau nach einem der Ansprüche 3 bis 10, **dadurch gekennzeichnet, dass** die Durchgangsöffnung (2) und/oder der hintere Freiraum bzw. Aufnahmeraum (9) von einem ein- oder mehrteiligen Gepäckraumboden (20) überdeckt ist, der lösbar oder verstellbar angeordnet ist oder eine Öffnung aufweist, die von einem lösbaren oder verstellbaren Bodenteil verschließbar ist.

## Claims

1. A body rear end of a motor vehicle, having a cavity which is formed over the rear axle in the body of the motor vehicle, **characterised in that** the cavity is formed by a vertical through-opening (2) which is limited at the front and at the back in each case by a cross member (3, 4) and laterally in each case by a side member (5, 6) of the body, which form a frame (7) which is closed over the periphery of the through-opening (2), and the through-opening (2) is closed in liquid-tight manner by a separate container (25, 28) which is connected securely or detachably to the side members and cross members (3, 4, 5, 6).

2. A body rear end according to Claim 1, **characterised in that** the container (25, 28) is introduced and fastened into the through-opening (2) at least in regions from above or from below until it comes to lie against stop faces on the side members (5, 6) and/or cross members (3, 4).

3. A body rear end according to Claim 1 or Claim 2, **characterised in that** a front clearance or receiving space (8) is formed in front of the frame (7) and/or a rear clearance or receiving space (9) is formed behind the frame (7).

4. A body rear end according to one of Claims 1 to 3, **characterised in that** a fuel tank (10, 25, 29) and/or at least one high-voltage battery (26, 27, 30) and/or a container (28) for a catalytic reducing agent for treating and improving the exhaust of the vehicle engine and/or a container (31, 32, 33) for a gaseous or liquid gas or hydrogen or a reformer which is required for converting petrol into hydrogen is or are arranged in the through-opening (2) or optionally in the front (8) and/or rear clearance or receiving space (9).

5. A body rear end according to Claim 3 or Claim 4, **characterised in that** the side members (5, 6) extend rearwards at least as far as the lateral rear end region of the rear clearance or receiving space (9).

6. A body rear end according to one of Claims 3 or 5, **characterised in that** the front (8) and/or rear clearance or receiving space (9) is limited in water-tight manner at the bottom, at the front and at the back and also in each case laterally by walls.

7. A body rear end according to one of Claims 3 to 6, **characterised in that** at least one side member (5, 6) in a top view is arranged laterally between the laterally outer edge region of the rear clearance or receiving space (9) and a laterally inner edge region of a laterally outer receiving compartment (16, 17) and runs rearwards at least to over the rear edge region of the laterally outer receiving compartment (16, 17), and the laterally outer receiving compartment (16, 17) in the longitudinal direction of the vehicle extends rearwards from a side region of the rear clearance or receiving space (9) to beyond the rear edge region of the rear clearance or receiving space (9), or additionally the base of the receiving compartment (16, 17) is arranged with a vertical distance above or below the laterally adjacent side member (5, 6) or at the level of the adjacent side member.

8. A body rear end according to one of Claims 3 to 7, **characterised in that** behind the rear clearance or receiving space (9) a silencer (18) of an exhaust system of the motor vehicle is arranged for example with its longitudinal extent in the transverse direction of the vehicle, and/or optionally a battery (19) is arranged in the laterally outer receiving compartment (16).

9. A body rear end according to one of Claims 3 to 8, **characterised in that** the side members (5, 6) are connected behind the rear clearance or receiving space (9) or optionally behind the laterally outer receiving compartment (16, 17) or optionally behind the silencer (18) by means of a vehicle body cross member (13).

10. A body rear end according to one of Claims 3 to 9, **characterised in that** a fuel tank (29) or at least one high-voltage battery (26, 27, 30) or a container for a catalytic reducing agent for treating and improving the exhaust of the vehicle engine or a container (31, 32) for a gaseous or liquid gas or hydrogen or a reformer which is required for converting petrol into hydrogen is arranged in each case in the through-opening (2) or optionally in the front (8) and/or rear clearance or receiving space (9) on one side or at the front or at the back, and a fuel tank or at least one high-voltage battery (26, 27, 30) or a container for a catalytic reducing agent for treating and improving the exhaust of the vehicle engine or a container (31, 32) for a gaseous or liquid gas or hydrogen or a reformer which is required for converting petrol into hydrogen is arranged on the other side, these being connected or being able to be connected to at least one drive or if suitable to a fuel cell of the motor vehicle or for example connected together if they are all of the same type.

11. A body rear end according to one of Claims 3 to 10, **characterised in that** the through-opening (2) and/or the rear clearance or receiving space (9) is covered by a one-part or multi-part luggage compartment base (20) which is arranged to be detachable or adjustable or has an opening which can be closed by a detachable or adjustable base part.

## Revendications

1. Structure arrière de véhicule automobile comprenant un volume creux positionné au-dessus de l'essieu arrière dans la carrosserie du véhicule,
**caractérisée en ce que**
le volume creux est formé au travers d'une ouverture de passage verticale (2) qui est respectivement limitée à l'avant et à l'arrière par une traverse (3, 4) et latéralement par un longeron (5, 6) qui forment un cadre (7) fermé sur la périphérie de l'ouverture de passage (2), et l'ouverture de passage (2) est fermée de façon étanche aux liquides par un réceptacle séparé (25, 28) relié de façon fixe ou amovible avec les longerons et les traverses (3, 4, 5 et 6).

2. Structure arrière conforme à la revendication 1,
**caractérisée en ce que**
le réceptacle (25, 28) est inséré par le haut ou par le bas dans l'ouverture de passage (2), au moins par zones jusqu'à ce qu'il s'applique sur des surfaces formant butée des longerons (5, 6) et/ou des traverses (3, 4) et est fixé.

3. Structure arrière conforme à la revendication 1 ou 2,
**caractérisée en ce qu'**
elle comporte à l'avant du cadre (7) un volume libre avant ou un volume de réception (8) et/ou à l'arrière du cadre (7) un volume libre arrière ou un volume de réception arrière (9).

4. Structure arrière conforme à l'une des revendications 1 à 3,
**caractérisée en ce que**
dans l'ouverture de passage (2) ou, le cas échéant, dans le volume libre ou volume de réception avant (8) et/ou arrière (9) est(sont) monté(s) un réservoir de carburant (10, 25, 29) et/ou au moins un accumulateur haute-tension (26, 27, 30), et/ou un réceptacle (28) pour un agent de réduction catalytique permettant de traiter et d'améliorer les gaz d'échappement du moteur du véhicule et/ou un réceptacle (31, 32, 33) pour un gaz ou de l'hydrogène gazeux ou liquéfié, ou un agent de reformage nécessaire pour la transformation de l'essence en hydrogène.

5. Structure arrière conforme à la revendication 3 ou 4,
**caractérisée en ce que**
les longerons (5, 6) s'étendent vers l'arrière au moins jusqu'aux zones d'extrémité latérales arrières du volume libre ou du volume de réception arrière (9).

6. Structure arrière conforme à l'une des revendications 3 ou 5,
**caractérisée en ce que**
le volume libre ou le volume de réception avant (8) et/ou arrière (9) est(sont) limité(s) vers le bas à l'avant et à l'arrière ainsi que latéralement par des parois étanches à l'eau.

7. Structure arrière conforme à l'une des revendications 3 à 6,
**caractérisée en ce qu'**
au moins un longeron (5, 6) est situé, en vue de dessus, latéralement entre la zone de bord latérale externe du volume libre ou du volume de réception arrière (9) et une zone de bord latérale arrière d'un compartiment de réception latéral externe (16, 17), et s'étend vers le bas au moins jusqu'au dessus de la zone de bord arrière du compartiment de réception latéral externe (16, 17), et le compartiment de réception latéral externe (16, 17) s'étend dans la direction longitudinale du véhicule de la zone latérale du volume libre ou du volume de réception arrière (9) jusqu'au dessus de la zone de bord arrière du volume libre ou du volume de réception arrière (9), ou, en outre, le fond du compartiment de réception (16, 17) est situé à distance verticale au-dessus ou au-dessous du longeron latéralement voisin (5, 6) ou à la hauteur de ce longeron.

8. Structure arrière conforme à l'une des revendications 3 à 7,
**caractérisée en ce qu'**
à l'arrière du volume libre ou du volume de réception arrière (9) est monté un pot d'échappement (18) de l'installation d'échappement du véhicule, par exemple ayant son étendue longitudinale dans la direction transversale du véhicule, et/ou le cas échéant une batterie (19) est montée dans le compartiment de réception latéral externe (16).

9. Structure arrière conforme à l'une des revendications 3 à 8,
**caractérisée en ce que**
les longerons (5, 6) sont reliés à l'arrière du volume libre ou du volume de réception arrière (9) ou, le cas échéant, à l'arrière du compartiment de réception latéral externe (16, 17) ou le cas échéant à l'arrière du pot d'échappement (18) par l'intermédiaire d'une traverse (13) de la carrosserie.

10. Structure arrière conforme à l'une des revendications 3 à 9,
**caractérisée en ce que**
dans l'ouverture de passage (2) ou, le cas échéant, dans le volume libre ou le volume de réception avant (8) et/ou dans le volume libre ou dans le volume de réception arrière (9) est monté, sur un côté ou à l'avant ou à l'arrière, un réservoir de carburant (29), ou au moins un accumulateur haute tension (26, 27, 30) ou un réceptacle pour un agent de réduction catalytique permettant le traitement et l'amélioration des gaz d'échappement du moteur du véhicule, ou un réceptacle (31, 32) pour un gaz ou de l'hydrogène gazeux ou fluidifié ou un agent de reformage nécessaire pour la transformation de l'essence en hydrogène, et, de l'autre côté, est monté un réservoir de carburant ou au moins un accumulateur haute tension (26, 27, 30), ou un réceptacle pour un agent de réduction catalytique permettant le traitement et l'amélioration des gaz d'échappement du moteur du véhicule, ou un réceptacle (31, 32) pour un gaz ou de l'hydrogène gazeux ou liquéfié ou un agent de reformage nécessaire pour la transformation de l'essence en hydrogène, qui peuvent être reliés ou sont reliés à au moins un organe d'entraînement, ou dans le cas adapté avec une pile à combustible du véhicule, ou, par exemple, en cas de similitude entre eux.

11. Structure arrière conforme à l'une des revendications 3 à 10,
**caractérisée en ce que**
l'ouverture de passage (2) et/ou le volume libre ou le volume de réception arrière (9) est(sont) recouvert(s) par un fond de coffre à bagages (20) en une ou plusieurs parties qui est monté de façon amovible ou réglable ou comporte une ouverture pouvant être fermée par une partie de fond amovible ou réglable.
